# EUROPEAN PATENT SPECIFICATION

(11) **EP 2 410 230 B1**
(45) Date of publication and mention of the grant of the patent: **12.02.2014**
(21) Application number: 11174446.2
(22) Date of filing: 19.07.2011
(51) Int. Cl.: F16L 55/165

(54) **method of in situ repair (relining) of pipes or conduits with latent hardeners**
Rohrauskleidungsverfahren mit latenten Härtungsmitteln
Méthode d'application d'un revêtement dans un conduit avec durcisseurs latents

(30) Priority: 19.07.2010 IT MI20101329
(43) Date of publication of application: 25.01.2012
(73) Proprietor: Elantas Italia S.r.L., 43044 Collecchio (PR) (IT)
(72) Inventor: Gherardi, Paola, 43124 PARMA (IT); Busi, Marco, 46100 MANTOVA (IT); Dalcanale, Enrico, 43124 PARMA (IT); Guiduzzi, Fabio, 47100 FORLI' (IT); Mbanda Yebeutchou, Roger, 42044 GUALTIERI (REGGIO EMILIA) (IT)
(74) Representative: Biggi, Cristina

(56) References cited:
- EP-A2- 0 680 988
- WO-A1-01/88338
- WO-A1-2008/089167
- CN-A- 101 372 154
- US-A- 4 521 465

## Description

The present invention relates to a method for repairing (relining) pipes or conduits and a product usable for the method.

The worldwide problem of scarcity of water resources is in part due to leakages that occur along water distribution lines.

In Italy it is estimated that about 30% of the water that enters the water pipelines does not reach dwellings due to infiltration, leakage from connections and in the worst cases breakages.

Small losses or infiltrations are mostly due to differences of diameter or thickness, to the characteristics of the material and to mechanical stress (during assembly or use) to which the water lines are subjected. With the technological progress of polymer materials pipes have been developed and used made of polyvinyl chloride/polyethylene, with performance levels in terms of efficiency and resistance that are decidedly improved with respect to the previous steel pipes. Unfortunately however the idea of having to entirely replace the thousands of kilometres of water pipelines is a project difficult to realise, both from the economic point of view and from the point of view of application. Direct interventions on the pipelines would cause, beyond an obviously expensive use of means, also a considerable disturbance for people, since roads and buildings would have to be broken and/or modernised.

The replacement of pipes, with the use of new materials, is strictly necessary only in the most serious cases, where there is breakage of the pipeline due to grave structural problems, which it is not possible to remedy in any other way. On the contrary, in the most frequent cases of infiltrations or micro-cracking a particularly attractive remedy is to repair the pipes using the "relining" technology, i.e. repairing in situ, also known as "CIPP" (Cured in place Pipe). This technique is based on the recuperation of the pipe, intervening only at a few entry points (water passage entry points and connections). Following the analysis of the pipe, in general performed using small tv-equipped robots (a similar principle to that of endoscopy in the medical field), a sheath is inserted, generally made of a felt and a liner, impregnated with heat-hardening resin, which is applied internally of the damaged pipe. The liner is constituted by a thermoplastic and flexible polymer support (in general a polyolefin or polyester polyurethane) reinforced with tissue or polyester felt or a glass mix. Once the liner has been applied, the heat-hardening resin is polymerised (by running hot water or steam in the pipe) such as to consolidate the flexible sheath with the old pipe. An alternative example of lining component is disclosed in US 4 521 465.

All of the above enables the conduit to be recuperated by working at a few entry points without any need to dig. This technique is also applicable for relining conduits in potentially dangerous zones, such as for example chemical plants, or in repair of fire protection rings, also in this case keeping the operation invasive only to a low extent. Today the majority of the relining applications comprises the use, as a liner primer, of polyester or vinyl ester-based resins diluted in styrene. By radical polymerisation, these give rise to cross-linking of the resin which enables consolidation between the old piping and the sheath. The polyester-based systems exhibit considerable drawbacks in relation to:
use for applications in contact with potable water, due to the release of the volatile substances generally present in the material (styrene) which would alter the composition of the water and pollute it;
contact with hot and potentially aggressive fluids, due to the limited chemical and thermal resistance of the hardened resin;
operate on large-dimension pipings due to the considerable shrinkage of the resin during the hardening reaction due to high exothermy.

Epoxy based resins have been used as alternatives to polyester based resins.

These are generally bicomponent, do not contain solvents but are constituted by the resin and by a cross linking agent, called a hardener, which have to be mixed before impregnating the felt/liner.

By a polyaddition mechanism, the two components generate a cross-linking reaction and form a material having good mechanical characteristics and does not pollute the liquids it enters into contact with. This happens because since the epoxy based resins are "solvent-free", all the chemical substances present are consumed during polymerisation, and encapsulated in the final material. To date the main problems to solve, in relation to the relining technology using epoxy resins, derive from the need to satisfy two opposite requirements: a long inhibition time of the polymerisation between the resin and the hardener, once the mix of the two has been applied on the sheath, for obtaining impregnated liner in the factory and for transporting it to the site for installation, even after days, and a brief time of polymerisation once the liner has been positioned internally of the pipeline, such as to limit the energy consumption the operator incurs in order to cause the polymerisation reaction of the resin. This hardening process of the system is generally done by filling the piping with hot water or steam.

These requirements are today satisfied by use of systems having different reactivity, according to the length and size of the repair to be realised, blocking the state of advancement of the reaction by means of cooling with ice or refrigeration, once impregnation of the liner has been performed.

At present the application of epoxy-resin based relining uses bicomponent systems (resin and hardener) where the reactivity of the system is modified by changing the formulation of the hardener. Hardeners with different reactivity at present in use are amines, primary or secondary or tertiary, amides and anhydrides.

The use of these hardeners enables a vast range of reactivity to be achieved. However, all have in common the inexorable advance of polymerisation and cross linking, once mixed with the resin.

This reactivity is slowed down in the initial stages of storage, by keeping the impregnated sheaths at a low temperature, while after laying the sheath, the cross linking reaction kinesis increases such as to consolidate the sheath to the old pipe. Unfortunately for epoxy resins with hardeners used at present there is a need for a long latency during the first stage of application which is accompanied by a need for longer time at high temperature for consolidation, because of the slow reaction kinetics.

Also, storing at low temperatures, from 0 to -20°, in order to block the reactions during transport, and a greater temperature rise to cover during heating (from 0 to 100°C) incur very considerable working costs.

In the light of the problems relating to the use of known relining methods, there is a need in the sector for a pipe or conduit repairing method which enables modulating the reactivity of the cross-linking reaction or the hardening of the epoxy resin, from a situation or more or less total inertia to a situation of total reactivity consequent to the application of an external stimulus.

This need is solved by an in situ repair method (relining) of pipes or conduits and by a product to be used in the method, as delineated in the accompanying claims.

The present invention relates to a method for in situ repairing (relining) pipes or conduits comprising steps of:
a) applying to a substrate a dispersion comprising a crosslinkable resin (also known as a hardener in the following patent text for application), and optionally an amine compound;
b) applying said substrate to the pipe or conduit to be repaired;
c) applying an external stimulus to the substrate to start off the cross-linking reaction.

In the present invention, the method is characterised in that it uses, as cross-linking/hardening agent, a carbamate salt of an amine.

The carbamate salt is used in dispersion, with the crosslinkable resin in stoichiometric quantity; for example, in a weight ration comprised between 100:14 and 100:45 resin/carbamate salt.

The amine compound can be present or absent according to the carbamate salt used. In a case in which the amine compound is present it will be comprised in a weight relation with respect to the carbamate salt which is comprised between 1:1 and 1:4 salt/amine.

The carbamate salt is preferably obtained via the carbonation reaction of the amines with CO₂:

Amine + CO₂ → carbamate salt of amine

The carbamate salts can aggregate in the form of supramolecular polymers and are solid. They are obtained by adding CO₂ (in gas or solid form) into the mixture of the amine in solvent. The reaction can be performed at ambient temperature or by heating, according to the starting amine.

At the end of the reaction, the carbamate salts are isolated from the reaction ambient, preferably by filtration, and ground and/or treated with ultrasounds up to obtaining the desired granulometry. For the purposes of the invention, the preferred granulometries are ≤ 100 µm, more preferably ≤ 50 µm, still more preferably ≤ 20 µm.

These granulometries guarantee a good dispersion of the hardening agent in the crosslinkable resin and a good reaction uniformity.

The carbamate salts used in the present invention are preferably obtained by the reaction of a primary amine have at least two primary amine groups, with carbon dioxide.

The primary amine preferably possesses two or three primary amine groups.

In particular, the primary amine is aliphatic, cyclo-aliphatic, aromatic or aliphatic-aromatic. The aliphatic amine is preferably a C4-C10-alkylamine, linear or branched.

More preferably, the aliphatic amine is a linear C4-C10-alkylamine.

The aliphatic amine advantageously used in the present invention is selected from among: butanediamine, hexamethylenediamine, trimethylhexamethylenediamine.

The cyclo-aliphatic amine is preferably a C6-C20 alkylamine containing at least an aliphatic cyclic group or an aliphatic heterocyclic from C4 to C8. The cyclic or heterocyclic aliphatic group can be replaced with linear or branched C1-C6-alkyl groups.

More preferably, the cyclo-aliphatic amine is a C8-C13-alkylamine containing at least a C6 cyclic group, possibly replaced with methyls.

The cyclo-aliphatic amine advantageously used in the present invention is selected from: isophoronediamine, diphenylmethanediamine or their mixes.

The aliphatic-aromatic amine is preferably a C6-C20 alkyl amine containing at least an aromatic cyclic or an aromatic heterocycle group.

More preferably the aliphatic-aromatic amine is a C8-C10 alkyl amine containing an aromatic cyclic group.

The aliphatic-aromatic amine advantageously used in the present invention is metaxylene diamine.

The aromatic amine is preferably a C6 amine containing at least an aromatic cyclic group to which the amine group is directly connected; for example, dianiline such as 4-(4-aminophenyl)aniline and 4-4'-methylene dianiline.

The aromatic amine is preferably a C6 amine containing at least an aromatic cyclic group to which the amine group is directly linked and 4-4'-methylene dianiline.

For the aims of the invention the primary amine can also be a mix of the above-mentioned amines.

The carbamate salts used in the present invention can be obtained by reaction of the primary amines having at least two primary amine groups as described above with carbon dioxide.

In particular, the primary amine is dissolved or suspended in a solvent selected from ethanol, methanol, ether, acetic nitrile, tetrahydrofuran, dimethylformamide or mixes thereof. Carbon dioxide is added to the solution thus obtained in solid form or, preferably, in gassy form. In the latter case the carbon dioxide is bubbled into the solution for a variable time according to the amine being used, for from 30 minutes to 120 minutes.

Once the carbamate salt formation reaction has been completed, the salt is separated from the reaction ambient and subjected to a treatment, for example with ultrasound and/or by grinding, to reduce the granulometry thereof.

The carbamate salts thus obtained can be represented by the following general formula:

H₃N⁺-R-NH-COO⁻

in which R represents a group deriving from the primary amines described above.

The carbamate salts are used in the method of the invention as cross-linking/hardening agents as they exhibit the important characteristic of having a latent reactivity.

This provides a crosslinkable/hardening resin mix with a blocked reactivity up until application of an external stimulus. An example of an external stimulation could be a raising of the temperature which causes release of CO₂ from the salt and therefore the unlocking of the primary amine and the initialising of the cross-linking reaction of the resin. Where the second amine compound is also present in the mix, the unlocking of the carbamate salt causes acceleration of the cross-linking reaction due to the availability of the primary amine following the unlocking. In this case the carbamate salt has a reaction booster function, as will be explained in more detail in the following of the present patent application.

The crosslinkable/carbamate salt/possible amine compound resin mix can be applied to the substrate, without any need to have to conserve the resulting product at refrigerator temperature (typically between 0 and -20°C) in order to avoid cross-linking reaction. The cross-linking or hardening reaction is inhibited even at ambient temperature, for a number of days, because the solid carbamate salts remain latent (i.e. they do not facilitate the cross-linking reaction) up to application of an external stimulus (for example up to heating the substrate).

In this way the substrate used in the repair of the pipings can be prepared in the factory and then, without need for conservation at temperature of below zero Celsius, transported to the worksite where the piping is to be relined (even after a number of days). The substrate is then applied to the site to be repaired and is brought to a temperature comprised between 60°C and 120°C, preferably between 80°C and 90°C in order to unlock the carbamate salt and initialise the cross-linking reaction.

The heating temperature varies according to the type of carbamate salt used. Some salts are stabler than others and require high temperatures to unlock them.

The raising of the temperature causes release of the CO₂ from the carbamate salt and the freeing of the primary amine, thus causes the initialisation of the cross-linking reaction.

The liberation of the CO₂ can also cause formation of a foam crosslinked resin. For the aims of the present invention a high degree of foaming of the crosslinked resin is to be avoided, as expansion reduces the mechanical properties of the product.

The calibration of the degree of expansion can be obtained by opportunely varying the reaction conditions, in ways that are known to an expert in the sector.

On conclusion of cross-linking, the substrate will be adhering to the pipe at the damaged site, thus realising the closure and therefore the repair of the conduits.

For this reason a further object of the invention is a substrate or product impregnated or scattered by a dispersion of crosslinkable resin and carbamate salt according to the present invention and possibly an amine compound.

The product is preferably used for *in situ* repair applications of pipes or conduits (relining). In this particular application the product is, preferably, a sheath comprising a flexible thermoplastic polymer support (liner) reinforced with polymer and polyester textile or felt or a glass mix.

The flexible polymer support is preferably a polyolefin (polyethylene or polypropylene) or a polyester polyurethane or a polyvinyl chloride. The polymer textile or felt is preferably polyester.

In a particular embodiment of the invention, the substrate can comprise glass fibres and/or carbon fibres. In this case, the substrate will not be impregnated with a crosslinkable resin mix/carbamate salt/possible amine compound, but the mixture will be arranged between the fibres such as to become an adhesive matrix that, after heating and initialisation of the cross-linking reaction, keeps the fibres together.

In this particular embodiment, the method of the invention comprises a step of application of a dispersion of crosslinkable resin /carbamate salt/possible amine compound, to the glass and/or to the carbon fibers and a successive heating step of the dispersion in order to initialise the cross-linking reaction and consequent hardening of the resin. In this case too, the advantage of the method of the invention is evident, as the dispersion of crosslinkable resin /carbamate salt/possible amine compound can be applied at room temperature and at a time preceding the cross-linking reaction, without there being any hardening of the resin. Only at the moment considered the most appropriate by the operator will an external stimulation be applied, such as heating, in order to cause initialisation of the cross-linking and hardening reaction.

In a further realisation, the substrate can be a compound material, plastic, metal, or an inorganic structure (marble, granite, etc.) on which the dispersion of crosslinkable resin /carbamate salt/possible amine compound of the invention is applied.

In this case, the method of the invention comprises steps of applying the dispersion to the substrate at room temperature, a step of application of the substrate comprising the dispersion to the second substrate, and a step of application of an external stimulation which causes degrading of the salt with consequent liberation of the CO₂ and the start-up of the cross-linking reaction at the moment chosen by the user.

In this way the resin hardens and functions as an adhesive which joins the two substrates.

The two substrates can be of the same chemical nature, i.e. they can both be a compound material, plastic, metal or an inorganic structure (marble, granite etc.), or can be of a different chemical nature, for example one of a compound material and the other of a metal material.

In this further embodiment of the invention too the advantages of the method, i.e. of being able to exploit the modulation of the reactivity of the epoxy system with the temperature, are evident.

The method of the invention, in the relining or other applications described above, thus enables obtaining a reactivity controlled by external stimulus induced by the operator, which can be modulated from the totally inert to the reactive, even after mixing the resin with the hardener. In this way the problems due to storing the substrate impregnated or scattered with mix/dispersion which, in the optimal case, might be compatible with the commercial lifetime of resinous systems, are resolved.

Beyond this, the method also enables reducing the application costs, as it is not necessary, as in known methods, to apply a large quantity of energy to cause the cross-linking reaction to advance up to completion, as, following unlocking of the carbamate salts, the reactivity of the system is compatible with the reactivity of the freed amine species that generally, being primary amines, impart a high level of reactivity. In addition, the impregnated substrate can be conserved at temperatures that are not between 0 and -20°C but can be kept in a range going from 0°C to the room temperature.

The crosslinkable resin/hardening agent mix can be prepared in an extemporaneous way by uniting the solid carbamate salt to the crosslinkable resin and mixing the two components such as to obtain a homogeneous dispersion.

In this case, the system is a bicomponent one in which the crosslinkable resin and the hardening agent are kept separate up until needed and then mixed before their application to the substrate.

Alternatively, the crosslinkable resin/hardening agent mixture can be pre-mixed; for example, the resin and the hardening agent can be marketed already mixed/dispersed, for an easier and faster application of the substrate at the moment of use.

This system, which can be defined single-component, can be realised only thanks to the fact that the carbamate salt is a latent hardening agent which remains inert up to application of an external stimulation. In particular, the single-component system can be conserved for up to 6 months at temperatures of not above 40°C.

The advantages of the single component system are obvious: greater velocity and facility of application and consequent reduction of general costs of the method and, in particular, of the mixing step.

In the particular embodiment in which the carbamate salt of the present invention is used in the presence of an amine compound, the compound functions as a second hardening agent, while the carbamate salt functions as a reaction booster. In this case, the carbamate salts are used together with long-latency hardeners commonly used in relining applications (for example, salified tertiary amines or polyamide hardeners) in a ratio that is well below the stoichiometric ration. For example, the crosslinkable resin/carbamate salt ratio is comprised between 100:2 and 100:10 in weight.

In this way an improvement is obtained in the properties of these commercial hardeners which, having a low reactivity (latent) require long hardening times and high temperatures to achieve the necessary mechanical properties in the final product. With the addition of the carbamate salts of the invention, apart from the maintenance/improvement of the latency, already attributable to known hardeners (for example, tertiary amines, amides or polyamides) on raising the temperature during the step of hardening of the system there is the unlocking of the carbamate with freeing of primary amines which are much more reactive (for example than polyamides) and enable initialisation and completion of the cross-linking reaction in much shorter times. In this case, as the carbamates are not in a stoichiometic ratio during the step of administering energy by heating, there is a smaller development of CO₂ which, combined with an overall reactivity of the system that is less than only the use of carbamate salts, enables non-expanded hardened materials to be obtained. In this particular application as a reaction booster, the amine compound is present in quantities comprised between a weight ratio of 100:3 and 100:8 with respect to the resin.

The crosslinkable resin advantageously use in the methods of the invention is an epoxy resin.

The epoxy resins preferably used for the present invention are bisphenol A glycidylether epoxy resins, bisphenol F glycidylether epoxy resins, multifunctional epoxy novolac and mixes thereof.

Epoxy resins can be used as they come or mixed with one or more reactive dilutants of the family of mono-functional epoxy dilutants, for example cresil glycidyl ether, alkyl glycidyl ethers, bifunctional dilutants such as butandiol diglycidyl ether, hexanediol diglycidyl ether, neopentyl glycol diglycidyl ether, glycol polypopylene diglycidyl ether, multifunctional epoxy dilutants such as trimethyl propane triglycidyl ether, epoxidised castor oil, epoxidised soya oil, derivatives of acrylated epoxy.

The amine compound used in the method of the present invention as second hardening agent can be any amine hardener commonly used in the relining sector, in the sector of adhesives or in the sector of matrices for glass and/or carbon fibers.

In particular, the amine compound is selected from among aliphatic organic molecules, cyclo-aliphatic, aromatic or aliphatic-aromatic amine, with one or more primary secondary and tertiary amine functions. The amine compound is preferably a tertiary amine and possibly salified. It is advantageous to use amines such as 2,4,6,_tris(dimethylaminoethyl)phenol or N,N-dimethylbenzilamine. The amine compound can also be a polyamidoamine hardener, or a imadazole polyamide or polyether amine hardener.

### EXAMPLES

### SYNTHESIS OF CARBAMATE SALTS

The amines used for synthetic reactions are reported elow:
Isophoronediamine **(1A)**
Metaxylenediamine **(2A)**
Oxibis-ethanamine **(3A)**
Diphenylmethanediamine **(4A)**
Ethylenediamine **(5A)**
Propanediamine **(6A)**
Butanediamine **(7A)**
Hexamethylenediamine **(8A)**

The amine and the solvent in volumetric ratio 1/10 are placed in a 250 ml two-neck flask and left to shake for 15-20 minutes at room temperature, such as to obtain a mix that is homogeneous as far as possible. The carbon dioxide is then bubbled into the mix via a nozzle at 3 Kg/cm² pressure. The above is maintained at atmospheric pressure and the excess CO₂ is freely left to exit from the flask. The carbon dioxide is bubbled into the amine/solvent mixture for a time that varies according to the amine used, from 60 minutes for ethylene diamine (5A) to 30 minutes for the MXDA (2A).

When the reaction is complete, the solid carbamate salt, suspended in the solvent in the reaction flask, is placed in the ultrasound bath for 15 minutes and then filtered on a glass filter. After filtration, the carbamate is collected in a flask and dried at the vacuum pump in order to eliminate the solvent. Then it is again placed in the ultrasound bath for 5 minutes in order to reduce the granulometry of the solid obtained. With this procedure a carbamate is obtained having a granulometry of between 45 and 20 µm, according to the amine used.

### Characterisations of the carbamate salts.

The solid products obtained were then characterised using the FT-IR (Perkin Elmer)spectrum with ATR interface for solids for evaluating the presence of the carboxyl group in the synthesised molecule, DSC (differential scansion calorimetry) PERKIN-ELMER Series 7 with double kiln, for evaluating the range of melting and melting enthalpy of the solids obtained. The reported fusion intervals were visually evaluated with a capillary heater.

### Synthesis of carbamate salt 1B starting from amine 1A.

The start of the carbamation reaction is almost instantaneous, the time required for the reaction is 90 minutes and the product, after filtration, is a powdery white solid, in ethanol as a solvent.

Carbamate melting point: 140-145°C

### DSC

| **CARBAMATE** | **Heating velocity (°C/min)** | **Start temperature (°C)** | **Peak melting temperature (°C)** | **ΔH (J/g) melting heat** | **Boiling temperature (°C)** |
|---|---|---|---|---|---|
| **1B** | 10 | 60 | 137 | 406.3 | 257 |

FT -IR: Stretching N-H (-NH₄⁺) 3342 cm⁻¹, combination asymmetrical bending NH₃⁺ and torsional oscillation NH₃⁺ 2172 cm⁻¹, asymmetric and symmetric bending N-H (-NH₃⁺) 1598 and 1515 cm⁻¹.

### Synthesis of carbamate salt 2B starting from amine 2A

The reaction is almost instantaneous, the time used for the reaction is thirty minutes; after this time the mix is less fluid, more milky.

After filtration the product appears as a floury white solid, in ethanol as a solvent.

Melting point of Carbamate: 166-170°C

### DSC:

| **CARBAMATE** | **Heating velocity (°C/min)** | **Start melting temperature (°C)** | **Peak melting temperature (°C)** | **ΔH (J/g) melting heat** | **Boiling temperature (°C)** |
|---|---|---|---|---|---|
| **2B** | 10 | 130 | 163 | 582.3 | 276 |

FT -IR: Stretching N-H (-NH₄⁺) 3337 cm⁻¹, asymmetric bending combination NH₃⁺ and torsional oscillation NH₃⁺ 2203 cm⁻¹, asymmetric and symmetric bending N-H (-NH₃⁺) 1600 and 1540 cm⁻¹.

### Synthesis of carbamate salt 3B starting from amine 3A.

The reaction is almost instantaneous, the time used for the reaction is 90 minutes and the product is a very granular white solid.

Melting point of Carbamate: 106-110°C

FT -IR: Stretching N-H (-NH₄⁺) 3342 cm⁻¹, asymmetric bending combination NH₃⁺ and torsional oscillation NH₃⁺ 2172 cm⁻¹, asymmetric and symmetric bending N-H (-NH₃⁺) 1598 and 1515 cm⁻¹.

### Synthesis of carbamate salt 4B starting from amine 4A.

The reaction is almost instantaneous, the time used for the reaction is 30 minutes and the product is a very granular white solid, in ethanol as a solvent. The product is stable in air.

### DSC

| **CARBAMATE** | **Heating velocity (° C/min)** | **Start melting temperature (°C)** | **Peak melting temperature (°C)** | **ΔH (J/g) melting heat** | **Boiling temperature (°C)** |
|---|---|---|---|---|---|
| **4B** | 10 | 120 | 143 | 261.0 | 336 |

FT -IR: Stretching N-H (-NH₄⁺) 3332 cm⁻¹, asymmetric bending combination NH₃⁺ and torsional oscillation NH₃⁺ 2197 cm⁻¹, asymmetric and symmetric bending N-H (-NH₃⁺) 1631 and 1550 cm⁻¹.

### Synthesis of carbamate salt 5B starting from amine 5A.

The reaction is slower with respect to the other amines, an hour and a half is required to complete. The product is a powdery white solid, in methanol as a solvent. The carbamate is unfortunately stable but not usable practically because of the low boiling point of the ethylene diamine, which is such that at the decomposition temperature of the solid salt (after 118°C) the freed ethylene diamine tends to pass immediately into the vapour phase without reacting with the epoxy, which compromises the stoichiometric ratios of the reaction.

| | | |
|---|---|---|
| Ethylene diamine: | melting point | 9°C |
| | Boiling point | 116°C |

| **CARBAMATE** | **Heating velocity (°C/min)** | **Start melting temperature (°C)** | **Peak melting temperature (°C)** | **ΔH (J/g) melting heat** |
|---|---|---|---|---|
| **5B** | 10 | 118 | 138 | -1.3 |

FT -IR: Stretching N-H (-NH₄⁺) 3337 cm⁻¹, asymmetric bending combination NH₃⁺ and torsional oscillation NH₃⁺ 2142 cm-¹, asymmetric and symmetric bending N-H (-NH₃⁺) 1636 and 1547 cm⁻¹.

### Synthesis of carbamate salt 6B starting from amine 6A.

The reaction has a velocity that is similar to that of amine **5A,** requiring an hour to complete. The product is a powdery white solid, in methanol as solvent. The carbamate exhibits the same drawbacks as the ethylene diamine.

| | | | |
|---|---|---|---|
| Propylene diamine **6A** | | Melting point | -12°C |
| | Boiling point | | 119°C |

| **CARBAMATE** | **Heating velocity (°C/min)** | **Start Melting temperature (°C)** | **Peak melting temperature (°C)** | **ΔH (J/g) melting heat** |
|---|---|---|---|---|
| **6B** | 10 | 105 | 139 | -158.1 |

FT -IR: Stretching N-H (-NH₄⁺) 3352 cm⁻¹, asymmetric bending combination NH₃⁺ and torsional oscillation NH₃⁺ 2142 cm⁻¹, asymmetric and symmetric bending N-H (-NH₃⁺) 1626 and 1553 cm⁻¹.

### Synthesis of carbamate salt 7B starting from amine 7A.

The reaction has a velocity similar to that of amine **5A,** requiring an hour to complete. The product is a powdery white solid, in methanol as a solvent. The carbamate is stable.

| | | | |
|---|---|---|---|
| Butylene diamine **8A:** | | Melting point | 52°C |
| | Boiling temperature | | 158°C |

| **CARBAMATE** | **Heating velocity (°C/min)** | **Start melting temperature (°C)** | **Peak melting temperature (°C)** | **ΔH (J/g) melting heat** |
|---|---|---|---|---|
| **7B** | 10 | 90 | 137 | -368.3 |

FT -IR: Stretching N-H (-NH₄⁺) 3321 cm⁻¹, asymmetric bending combination NH₃⁺ and torsional oscillation NH₃⁺ 2157 cm⁻¹, asymmetric and symmetric bending N-H (-NH₃⁺) 1626 and 1558 cm⁻¹.

### Synthesis of carbamate salt 8B starting from amine 8A.

The reaction is faster with respect to the other amines, requiring only 0.5 hours in order to complete. The product is a white floury solid, in methanol as a solvent. The carbamate in this case is stable and the boiling temperature enables use thereof.

| | | | |
|---|---|---|---|
| Hexamethylene amine **8A** | | Melting point | 39°C |
| | Boiling temperature | | 199°C |

| **CARBAMATE** | **Heating velocity (°C/min)** | **Start melting temperature (°C)** | **Peak melting temperature (°C)** | **ΔH (J/g) melting heat** |
|---|---|---|---|---|
| **8B** | 10 | 95 | 130 | -130.4 |

FT -IR: Stretching N-H (-NH₄⁺) 3332 cm⁻¹, asymmetric bending combination NH₃⁺ and torsional oscillation NH₃⁺ 2142 cm⁻¹, asymmetric and symmetric bending N-H (-NH₃⁺) 1633 and 1547 cm⁻¹.

### Performances from 1B to 8B:

The carbamate reactions of the amines in these operating conditions enable generally converting more than 95% of the amine in carbamate salt.

### LATENCY/REACTIVITY TEST OF THE CARBAMATE SALTS

Once the carbamate salts obtained have been characterised, and after characterising the degradation temperatures thereof, the decomposition temperature of the carbamate salts were examined in the mixture with resinous part of the system, such as to verify whether this might influence the unlocking temperatures and thus the dissolving temperatures of the salts. Some tests were made with basic type 828LV epoxy resin. Tests were later made with an epoxy resin used in the relining sector, marketed by Elantas Camattini (EC398). This resin can be defined within the group of epoxy resins modified with reactive dilutants. These experiments were done using the carbamate in a stoichiometric ratio. As for the DSC reactivity tests, tests were made with the amines that were considered stable in the atmosphere at room temperature, i.e. **1B, 2B, 4B** as far as the amines with the aliphatic-aromatic-cyclo-aliphatic structure were concerned and **5B, 6B, 7B, 8B,** for the aliphatic amines. The results obtained are shown in table 1.

As for the carbamate 2B scansions were made with DSC mixed in the 828LV resin in a stoichiometric ratio of 100:30 in isotherm at 60°C for 80 minutes and 80°C for 80 minutes. In the 60°C measures it can be noted that there are no exothermic peaks associable to the reactivity of the system which are evident in the use of the precursor 2A mixed with the resin. At 80°C the reaction with the carbamate seems to occur even if very slowly with respect to the use of the precursor 2A (Table 2).

**Table 1 - DSC calorimetries temperature scansion**

| **AMINE IN 828LV** | **Mixing ratio** | **Heating velocity (°C/min)** | **Reaction Start temperature (°C)** | **Reaction Peak melting temperature (°C)** | **ΔH (J/g) reaction heat** |
|---|---|---|---|---|---|
| IPDA **1A** | 100:25 | 10 | 53 | 105 | -361.6 |
| MXDA **2A** | 100:19 | 10 | 40 | 111 | -3843.9 |
| DADF **4A** | 100:29 | 10 | 40 | 113 | -424.5 |

| **CARBAMATES IN 828LV** | **Mixing ratio** | **Heating velocity (°C/min)** | **Reaction Start temperature (°C)** | **Reaction Peak melting temperature (°C)** | **ΔH (J/g) reaction heat** |
|---|---|---|---|---|---|
| IPDA (ether) **1B** | 100:35 | 10 | 105 | 128 | -66.7 |
| MXDA (ether) **2B** | 100:30 | 10 | 135 | 144 | -2177.4 |
| DADF **4B** | 100:40 | 10 | 100 | 128 | -266.8 |

The solvent used is in brackets

**Table 2 -DSC calorimetries isotherms**

| **MIX WITH 828LV** | **Mixing ratio** | **Isotherm at (°C)** | **Reaction start time (min)** | **Reaction Peak time temperature (°C)** | **ΔH (J/g) reaction heat** |
|---|---|---|---|---|---|
| MXDA **2A** | 100:19 | 60 | 5 | 16.2 | -240.5 |
| MXDA **2B** | 100:30 | 60 | -- | -- | 0 |
| MXDA **2A** | 100:19 | 80 | immediate | 3.9 | -380.4 |
| MXDA **2B** | 100:30 | 80 | 10 | 37.8 | -270.4 |

The tests were done using the formulation EC398 instead of resin.

**Table 3 - DSC calorimetries temperature scansion**

| **CARBAMATES IN EC398** | **ratio** | **Heating velocity (°C/min)** | **Reaction Start temperature (°C)** | **Reaction Peak melting temperature (°C)** | **ΔH (J/g) reaction heat** |
|---|---|---|---|---|---|
| IPDA (ether) **1B** | 100:36 | 10 | 105 | 135 | -163.2 |
| MXDA (ether) **2B** | 100:31 | 10 | 90 | 137 | -220.2 |
| DADF (ether) **4B** | 100:41 | 10 | 85 | 115 | -234.7 |
| DADF (ethanol) **4B** | 100:41 | 10 | 95 | 114 | -168.2 |

The solvent used is in brackets

There was generally a tendency of the carbamates to unlock at lower temperatures once mixed with the resin. Very probably the unlocking temperature of the carbamates in the mixture with the resin also depends on the real granulometry of the solid that is dispersed.

Tests were then made to compare the linear amines with the respective carbamates in the mixture with the resin EC398.

**Table 4 - DSC calorimetries temperature scansion**

| **AMINES IN EC398** | **ratio** | **Heating velocity (°C/min)** | **Reaction temperature (°C)** | **Maximum reaction peak temperature (°C)** | **ΔH (J/g) reaction heat** |
|---|---|---|---|---|---|
| ETHYLENE DIAMINE **5A** | 100:8 | 10 | 20 | 90 | -518.9 |
| PROPYLENE DIAMINE **6A** | *** | *** | *** | *** | *** |
| BUTILENE DIAMINE **7A** | 100:12 | 10 | 42 | 98 | -457.1 |
| HEXAMETHYLENE DIAMINE **8A** | 100:16 | 10 | 40 | 90 | -623.7 |
| | | | | | |

| **CARMAMATES INEC398** | **ratio** | **Heating velocity (°C/min)** | **Reaction temperature (°C)** | **Maximum reaction peak temperature (°C)** | **ΔH (J/g) reaction heat** |
|---|---|---|---|---|---|
| ETHYLENE DIAMINE **5B** | 100:14 | 10 | 118 | 138 | -1.2 |
| PROPYLENE DIAMINE **6B** | 100:16 | 10 | 105 | 139 | -158.3 |
| BUTILENE DIAMINE **7B** | 100:18 | 10 | 90 | 137 | -368.3 |
| HEXAMETHYLENE DIAMINE **8B** | 100:22 | 10 | 95 | 130 | -130.3 |

As for the measurements of the propylene diamine, the low purity of the commercial sample used has falsified the data obtained with the DSC in the resin/amine mix, and the data have therefore not been put in the table. In line with the others, though, are those obtained with the carbamate salt 6B in mixture with the resin. This is due to the fact that the carbamate salt which is in solid state has been purged of the impurities during the filtration step at the end of the reaction. This has enabled us to obtain reactivity values in line with those envisaged for the salt 6B with the resin. Apart from the DSC tests, other stability tests were made, more practical, i.e. by mixing the carbamate salt with the resin, leaving the whole at room temperature and observing how the viscosity of the system varied, which is an index of the advancement of the system.

These tests have shown how IPDA salt 1B dispersed in the resin leads to hardening thereof after a few days. The carbamates of the other two MXDA amines (2B) and DAF (4B) give reasonably consistent results and highlight a greater temporal stability in the resin.

**Table 5- Viscosity of sample mix of resin/carbamate conserved at 25°C over time.**

| **Viscosity (mPas)** | **t=0** | **1 month** | **2 months** | **4 months** | **6 months** |
|---|---|---|---|---|---|
| EC398/**2B** 100:30 | 1680 | 2360 | 4900 | 11350 | 32000 |

As for the second type of amine studied, i.e. linear amines, it can be seen how all the carbamate salts in the resin degrade more or less at the same values as the cyclo-aliphatic /aliphatic-aromatic ones, but apart from hexamethylenediamine at these temperatures the corresponding amines tend to evaporate directly.

The granulometry of the carbamate plays a decisive role for the viscosity/reactivity of the system.

The resulting value of the resin/carbamate system viscosity has been tested because this too can be a limit to use of the system for scattering/impregnating applications such as relining, for example.

The data in table 6 relate to products 2B and 8B, which have evidenced better behaviour in relation to the stability of both the carbamate as it is, and in a mixture with the resin.

**Table 6- Change in viscosity following addition of carbamate in different granulometries.**

| **Resin** | **Carbamate** | **granulometry (µm)** | **Viscosity at 25°C (mPas)** |
|---|---|---|---|
| EC398 | -- | -- | 660 |
| EC398 | MXDA **2B** | 45-32 | 3180 |
| EC398 | MXDA **2B** | 32-20 | 3050 |
| EC398 | MXDA **2B** | < 20 | 1680 |
| | | | |
| EC398 | ESAMET **8B** | 45-32 | 3060 |
| EC398 | ESAMET **8B** | < 20 | 1602 |

As can be evinced from the data, the two carbamates have similar behaviours, with a lower granulometry a lower mix viscosity, which can be a considerable advantage for the castability of the resin.

The reason for being sure of working with controlled-granulometry solids is that the felts used in the relining can be correctly impregnated, avoiding stratification of the solid present on the felt during the impregnation.

Experiments have been made on the thermal profiles of the resin/carbonate system of MXDA 2B in hardening. These experiments carried out on more relevant masses than those used for DSC studies, performed at temperatures of from 80°C up to 120°C have evidenced that by using the system in stoichiometric ratio (reactivity controlled only by the unlocking of the carbamate salts) the CO₂ freed together with the high reactivity of the system given by the temperature and the freed amines leads to obtaining an expanded material. As the reaction is very rapid there is an irregular expansion of the system which can be disadvantageous for application of the actual relining but can be exploited for other operations too.

### TEST FOR USE OF THE CARBAMATE SALTS AS REACTION BOOSTERS.

In order to be able to exploit the use of synthesised salts in relining, limiting release of CO₂ they have been used not in stoichiometric ratio solely as hardeners but as reaction boosters, i.e. in a mix with other hardeners which have the peculiarity of having a very bland reactivity. For the hardener, one already on the market was used, made by Elantas Camattini, which is characterised by high latency at low temperatures but consequently also has long hardening times at temperature. This hardener (W396) based on tertiary amine is generally used at a lower mix ratio (100:5 weight/weight).

There is no need for a stoichiometric ratio as it is a reaction which is only catalysed by the tertiary amine. In this case the carbamate is used below ratio but serves to accelerate the hardening reaction on raising of the temperature, the reaction can however be fully achieved thanks to the homo-polymerisation given by the W396. In this case, the smaller quantity of CO₂ released together with an overall reactivity of the system which does not go directly into the gel phase on unlocking of the carbamates, enables obtaining non-expanded materials. The testing was carried out at a ratio of 100:5:5 (EC398/W396/carbamate 2B).

The final result is the obtaining of a rigid material, not expanded and with a hardening temperature that is closer to the application of the relining.

A series of tests have been carried out in order to compare the properties of two systems: EC398/W396 (at present available on the market) with the system having 5 parts in weight of carbamate 2B added. The first tests related to the stability of the mixtures, the hardening time and the glassy transition temperatures.

**Table 7- Mix stability, 50ml volume**

| **System** | **Composition (wt/wt)** | **VISCOSITY (mPas) t=0** | **VISCOSITY (mPas) t=1gg** | **VISCOSITY (mPas) t=3gg** | **VISCOSITY (mPas) t=6gg** |
|---|---|---|---|---|---|
| EC398/W396 | 100:5 | 1547 | 3360 | 10750 | hardened |
| EC398/W396/**2B** | 100:5:5 | 1347 | 3100 | 12000 | 89500 |

**Table 8- gel time on slim layer of 3mm at various temperatures**

| **System** | **Composition (wt/wt)** | **Test temperature 40°C** | **Test temperature 50°C** | **Test temperature 70°C** | **Test temperature 80°C** | **Test temperature 90°C** |
|---|---|---|---|---|---|---|
| EC398/W396 | 100:5 | 18 h | 3 h | 2.5 h | 1.75 h | 1.2 h |
| EC398/W396/**2B** | 100:5:5 | 21 h | 6 h | 4 h | 1.8 h | 1 h |

**Table 9- Glassy transition temperature of hardened material.**

| **Tg (°C)** | **Composition (wt/wt)** | **Standard hardening cycle 24h at ambient temperature + 16h at 60°C** | **Hardening cycle 2 h at 80°C** |
|---|---|---|---|
| EC398/W396 | 100:5 | 66.5 | 60.2 |
| EC398/W396/**2B** | 100:5:5 | 69.7 | 65.5 |

From the data of tables 7, 8, 9, it can be seen how the stability in the mix of the two systems is entirely comparable, as in the gel time data on the slim layer there is an increase in the latency of the system modified with carbamates (greater passage time to the get state) below the unlocking temperature, while there is a shorter hardening time at temperature above the unlocking time of the carbamate. Finally, the Tg of the system in both the case of the hardening cycle defined in Elantas CAMATTINI as a standard cycle and in the case of the 2 h cycle at 80°C that most approaches the real situation of the application of the relining, is greater for the modified system.

**Table 10 - reactivity of the system in mass. Volume of 1000ml at a temperature of 35°C**

| **System** | **Composition** | **Time at 50°C (min)** | **Tempo at peak (min)** | **Peak (°C)** | |
|---|---|---|---|---|---|
| EC398/W396 | 100:5 | 544 | 730 | 128 | |
| EC398/W396/**2B** | 100:5:5 | Does not reach 50°C | **** | **** | At these temperatures the system does not harden |

**Table 11 - reactivity of the system in mass. Volume of 500ml at a temperature of 50°C**

| **System** | **Composition** | **Time at 65°C (min)** | **Tempo at peak (min)** | **Peak (°C)** |
|---|---|---|---|---|
| EC398/W396 | 100:5 | 128 | 222 | 148 |
| EC398/W396/**2B** | 100:5:5 | 131 | 275 | 156 |

From the data of tables 10 and 11 it can be seen how the modified system even in mass at low temperature enables far greater use times (even at 35°C it does not harden) while at 50°C reactivities are comparable, although the system with carbamate still has a slightly greater latency. All the data obtained by these reactivity tests are improvements as far as application of the relining is concerned.

After having completed the tests, test moulds were prepared to perform mechanical hardness tests, flexibility, traction on the hardened materials.

**Table 12- Shore hardness after hardening cycle of 24 h at ambient temperature + 15 h at 60°C:**

| **System** | **Composition** | **A (15sec)** | **D (15sec)** |
|---|---|---|---|
| EC398/W396 | 100:5 | 87 | 64 |
| EC398/W396/**2B** | 100:5:5 | 92 | 76 |

**Table 13- ASTM D790 flexion with two hardening cycles**

| **System hardened 24h at ambient temperature+15 h at 60°C** | **Composition** | **MAX LOAD(MPa)** | **MAX DEF (%)** | **BREAKAGE DEF %** | **MODULE (MPa)** |
|---|---|---|---|---|---|
| EC398/W396 | 100:5 | 97.9 | 5.1 | 6.0 | 2570 |
| EC398/W396/**2B** | 100:5:5 | 108.3 | 4.7 | 4.7 | 2930 |
| | | | | | |

| **System hardened 2 h at 80°C** | **Composition** | **MAX LOAD (MPa)** | **MAX DEF (%)** | **BREAKAGE DEF %** | **MODULE (MPa)** |
|---|---|---|---|---|---|
| EC398/W396 | 100:5 | 33.9 | 5.8 | **** | 1030 |
| EC398/W396/**2B** | 100:5:5 | 87.6 | 5.2 | 6.6 | 2490 |

**Table 14- ASTM D790 flexion of the felt impregnated with the system and hardened 2h at 90°C**

| **System hardened 3 h at90°C** | **Composition** | **MAX LOAD (MPa)** | **MAX DEF (%)** | **BREAKAGE DEF %** | **MODULE (MPa)** |
|---|---|---|---|---|---|
| FELT + EC398/W396/**2B** | *** | 64.1 | 3.73 | 3.75 | 2080 |
| FELT + EC398/W396 | *** | 59.1 | 4.25 | *** | 1780 |

In tests on mechanical properties a big improvement in the flexion properties of the material and in particular the module are seen. This parameter is very important for the applicator and the fact of having a module which after two hours at 80°C is more than double the classic system, is a very important result.

## Claims

1. Method for *in situ* repair (relining) of pipes or conduits comprising the steps of:
a) Preparing a latent epoxy system by applying to a substrate a dispersion comprising an epoxy resin, a carbamate salt obtained by reacting a primary amine, having at least two primary amine groups, with carbon dioxide and optionally an amine compound;
b) Applying said substrate to the pipe or conduit to be repaired;
c) Unlocking the carbamate salt and starting the crosslinking reaction by heating the substrate.

2. Method according to claim 1, wherein said carbamate salt of an amine is a carbamate salt of a primary amine having two or three primary amine groups.

3. Method according to claims 1 or 2 , wherein said primary amine is an aliphatic, cyclo-aliphatic, aromatic or aliphatic-aromatic amine,

4. Method according to any one of claims 1 to 3, wherein said carbamate salt is comprised in said dispersion in stoichiometric quantity with respect to the crosslinkable resin, preferably in a ratio by weight comprised between 100:14 and 100:45 resin/carbamate salt.

5. Method according to any one of claims, 1 to 3, wherein said carbamate salt is comprised in said dispersion in lower than stoichiometric quantity with respect to the crosslinkable resin, preferably in a ratio by weight of between 100:2 and 100:10.

6. Method according to any one of claims 1 to 5, wherein said amine compound is a tertiary amine, optionally salified, or a polyamidoamine compound, a imidazole polyamide compound or a polyetheramine compound.

7. Method according to any one of claims 1 to 6, wherein said substrate is a sheath comprising a flexible thermoplastic polymeric support, preferably a polyolefin, polyurethane or polyvinyl compound, reinforced with polymeric fabric or felt or glass mix.

8. Method according to any one of claims 1 to 7, wherein said substrate is heated to a temperature comprised between 60°C and 120°C, preferably between 80°C and 90°C.

9. Manufactured product for use in a method according to any one of claims 1 to 8, comprising a flexible thermoplastic polymeric support reinforced with polymeric fabric or felt or glass mix, said support being impregnated or scattered with a dispersion comprising an epoxy resin, a carbamate salt of an amine, obtained by reacting a primary amine, having at least two primary amine groups, with carbon dioxide, and, optionally, an amine compound.

10. Manufactured product according to claim 9, wherein said flexible thermoplastic polymeric support is a polyolefin, polyurethane or polyvinyl compound.

11. Use of a composition comprising an epoxy resin, a carbamate salt obtained by reacting a primary amine, having at least two primary amine groups, with carbon dioxide and optionally, an amine compound in a method according to any one of claims 1 to 8.

## Patentansprüche

1. Rohrauskleidungsverfahren, umfassend folgende Schritte:
a) Vorbereiten eines latenten Expoxidsystems durch das Auftragen auf ein Substrat einer Dispersion, umfassend ein Epoxidharz, ein Carbamatsalz, erhalten durch die Reaktion eines primären Amins, aufweisend mindestens zwei primäre Amingruppen, mit Kohlendioxid und optional einem Amingemisch;
b) Anbringen dieses Substrats am auszukleidenden Rohr;
c) Auflösen des Carbamatsalzes und Einleiten der Vernetzungsreaktion durch die Erhitzung des Substrats.

2. Verfahren nach Anspruch 1, wobei es sich beim Carbamatsalz eines Amins um ein Carbamatsalz eines primären Amins handelt, aufweisend zwei oder drei primäre Amingruppen.

3. Verfahren nach Anspruch 1 oder 2, wobei es sich bei dem primären Amin um ein aliphatisches, cycloaliphatisches, aromatisches oder aliphatischaromatisches Amin handelt.

4. Verfahren nach einem der Ansprüche 1 bis 3, wobei das Carbamatsalz in der Dispersion in stöchiometrischer Menge im Vergleich zum vernetzbaren Harz enthalten ist, vorzugsweise in einem Gewichtsverhältnis zwischen 100:14 und 100:45 Harz/Carbamatsalz.

5. Verfahren nach einem der Ansprüche 1 bis 3, wobei das Carbamatsalz in der Dispersion in einer geringeren als der stöchiometrischen Menge im Vergleich zum vernetzbaren Harz enthalten ist, vorzugsweise in einem Gewichtsverhältnis zwischen 100:2 und 100:10.

6. Verfahren nach einem der Ansprüche 1 bis 5, wobei es sich bei dem Amingemisch um ein tertiäres Amin handelt, optional in Salz verwandelt, oder um ein Polyamidoamingemisch, ein imidazoles Polyamidgemisch oder ein Polyetheramingemisch.

7. Verfahren nach einem der Ansprüche 1 bis 6, wobei es sich bei dem Substrat um eine Hülle handelt, umfassend einen flexiblen Thermoplastpolymerträger, vorzugsweise ein Polyolefin-, Polyurethan- oder Polyvinylgemisch, verstärkt mit Polymergewebe oder Filz oder einer Glasmischung.

8. Verfahren nach einem der Ansprüche 1 bis 7, wobei das Substrat auf eine Temperatur zwischen 60 °C und 120 °C erhitzt wird, vorzugsweise zwischen 80 °C und 90 °C.

9. Hergestelltes Produkt zur Verwendung bei einem Verfahren nach einem der Ansprüche 1 bis 8, umfassend einen flexiblen Thermoplastpolymerträger, verstärkt mit Polymergewebe oder Filz oder einer Glasmischung, wobei der Träger mit einer Dispersion, umfassend ein Epoxidharz, ein Carbamatsalz eines Amins, erhalten durch die Reaktion eines primären Amins, aufweisend mindestens zwei primäre Amingruppen, mit Kohlendioxid, und optional ein Amingemisch, imprägniert oder bestreut wird.

10. Hergestelltes Produkt nach Anspruch 9, wobei es sich bei dem flexiblen Thermoplastpolymerträger um ein Polyolefin-, Polyurethan- oder Polyvinylgemisch handelt.

11. Verwendung einer Mischung, umfassend ein Epoxidharz, ein Carbamatsalz, erhalten durch die Reaktion eines primären Amins, aufweisend mindestens zwei primäre Amingruppen, mit Kohlendioxid, und optional ein Amingemisch in einem Verfahren nach einem der Ansprüche 1 bis 8.

## Revendications

1. Méthode d'application d'un revêtement dans un conduit comprenant les phases de :
a) préparation d'un système époxyde latent en appliquant à un substrat une dispersion comprenant une résine époxy, un sel de carbamate obtenu par réaction d'une amine primaire ayant au moins deux groupes aminés primaires avec du dioxyde de carbone et éventuellement un composé aminé ;
b) application dudit substrat à la canalisation ou à la conduite à réparer ;
c) déblocage du sel de carbamate et lancement de la réaction de réticulation en chauffant le substrat.

2. Méthode selon la revendication 1, dans lequel ledit sel de carbamate d'une amine est un sel de carbamate d'une amine primaire ayant deux ou trois groupes aminés primaires.

3. Méthode selon les revendications 1 ou 2, dans lequel ladite amine primaire est une amine aliphatique, cyclo-aliphatique, aromatique ou aliphatique-aromatique.

4. Méthode selon l'une quelconque des revendications de 1 à 3, dans lequel ledit sel de carbamate est compris dans ladite dispersion en quantité stoechiométrique par rapport à la résine réticulable, de préférence dans un rapport en poids résine/sel de carbamate compris entre 100:14 et 100:45.

5. Méthode selon l'une quelconque des revendications de 1 à 3, dans lequel ledit sel de carbamate est compris dans ladite dispersion en quantité stoechiométrique inférieure par rapport à la résine réticulable, de préférence dans un rapport en poids compris entre 100:2 et 100:10.

6. Méthode selon l'une quelconque des revendications de 1 à 5, dans lequel ledit composant aminé est une amine tertiaire, éventuellement salifiée, ou un composé de polyamidoamine, un composé de polyamidoimidazoline ou un composé de polyétheramine.

7. Méthode selon l'une quelconque des revendications de 1 à 6, dans lequel ledit substrat est une gaine comprenant un support polymérisé thermoplastique souple, de préférence un composé en polyoléfine, en polyuréthane ou en polyvinyle, renforcé avec un tissu ou du feutre polymérisé ou un mélange de fibre de verre.

8. Méthode selon l'une quelconque des revendications de 1 à 7, dans lequel ledit substrat est chauffé à une température comprise entre 60 et 120 °C, de préférence entre 80 et 90 °C.

9. Produit manufacturé à utiliser dans un procédé selon l'une quelconque des revendications de 1 à 8, comprenant un support polymérisé thermoplastique souple renforcé avec un tissu ou du feutre polymérisé ou un mélange de fibre de verre, ledit support étant imprégné ou aspergé d'une dispersion comprenant une résine époxy, un sel de carbamate d'une amine, obtenu par réaction d'une amine primaire ayant au moins deux groupes aminés primaires avec du dioxyde de carbone, et éventuellement un composé aminé.

10. Produit manufacturé selon la revendication 9, dans lequel ledit support polymérisé thermoplastique souple est un composé en polyoléfine, polyuréthane ou polyvinyle.

11. Utilisation d'une composition comprenant une résine époxy, un sel de carbamate, obtenu par réaction d'une amine primaire ayant au moins deux groupes aminés primaires avec du dioxyde de carbone, et éventuellement un composé aminé dans un procédé selon l'une quelconque des revendications de 1 à 8.
